# EUROPEAN PATENT APPLICATION

(11) **EP 4 072 185 A1**
(43) Date of publication of application: **12.10.2022**
(21) Application number: 19955025.2
(22) Date of filing: 04.12.2019
(51) Int. Cl.: H04W 16/28, H04W 72/12, H04W 88/02

(54) **TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/047511
(87) International publication number: WO 2021/111564

(57) **Abstract**

A terminal according to one aspect of the present disclosure includes a receiving section that receives information indicating first priority of first uplink transmission and receives information indicating second priority of second uplink transmission, and a control section that controls, in a case where the first uplink transmission and the second uplink transmission overlap each other in time, the first uplink transmission and the second uplink transmission, based on at least one of a combination of the first priority and the second priority and a cell group of the first uplink transmission or the second uplink transmission. According to one aspect of the present disclosure, it is possible to appropriately control UL transmission even in a case where priority is configured for UL transmission.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (LTE Rel. 8 to Rel. 14), monitoring of radio link quality (radio link monitoring (RLM)) is performed. When a radio link failure (RLF) is detected through RLM, a user terminal (User Equipment (UE)) is requested to perform reestablishment of an RRC (Radio Resource Control) connection.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (e.g., NR), a study is underway to perform a procedure for detecting a beam failure (BF) and switching to another beam (which may be referred to as a beam failure recovery (BFR) procedure, BFR, and the like). In the BFR procedure, when a beam failure has occurred, a UE reports a beam failure recovery request (BFRQ) for requesting recovery of the beam failure.

It is under study that a UE reports notification of a beam failure detection, information related to a beam failure occurring cell, and information related to a candidate beam that is new (also referred to as a new candidate beam), by using one or more steps in the BFR procedure.

For NR of Rel. 16 or later versions, it is under study to configure or define priority for at least one of each UL signal and each UL channel (also referred to as a UL signal / UL channel and UL transmission below), based on a requirement or a traffic type of communication and the like.

The study of how to control configuration and the like of priority for UL transmission has not shown sufficient advancement. If UL transmission is not appropriately performed, this may cause reduction in system performance such as latency in BFR and reduction in throughput.

In view of above, an object of the present disclosure is to provide a terminal and a radio communication method that appropriately control UL transmission even in a case where priority is configured for UL transmission.

### Solution to Problem

A terminal according to one aspect of the present disclosure includes: a receiving section that receives information indicating first priority of first uplink transmission and receives information indicating second priority of second uplink transmission; and a control section that controls, in a case where the first uplink transmission and the second uplink transmission overlap each other in time, the first uplink transmission and the second uplink transmission, based on at least one of a combination of the first priority and the second priority and a cell group of the first uplink transmission or the second uplink transmission. Advantageous Effects of Invention

According to one aspect of the present disclosure, it is possible to appropriately control UL transmission even in a case where priority is configured for UL transmission.

### Brief Description of Drawings

FIG. 1 is a diagram to show an example of a BFR procedure in Rel. 15 NR;
FIG. 2 is a diagram to show an example of a new BFR procedure;
FIG. 3 is a diagram to show an example of a rule for collision of an SR and another UL transmission in Rel. 15 NR;
FIG. 4 is a diagram to show an example of a rule for collision of PUCCH-BFR and another UL transmission;
FIG. 5 is a diagram to show an example of a method for configuring priority of second information;
FIG. 6 is a diagram to show another example of the method for configuring priority of the second information;
FIG. 7 is a diagram to show an example of a rule for collision of the second information and another UL transmission;
FIG. 8 is a diagram to show an example of a schematic structure of a radio communication system according to one embodiment;
FIG. 9 is a diagram to show an example of a structure of a base station according to one embodiment;
FIG. 10 is a diagram to show an example of a structure of a user terminal according to one embodiment; and
FIG. 11 is a diagram to show an example of a hardware structure of the base station and the user terminal according to one embodiment.

### Description of Embodiments

### <Beam Failure Recovery>

For NR, a study is underway to perform communication by using beam forming. For example, a UE and a base station (e.g., a gNodeB (gNB)) may use a beam to be used for transmission of a signal (also referred to as a transmit beam, a Tx beam, and the like) and a beam to be used for reception of a signal (also referred to as a receive beam, a Rx beam, and the like).

In a case of using beam forming, influence of obstruction due to obstacles likely increases, which is assumed to deteriorate the radio link quality. Such deterioration in radio link quality may frequently cause a radio link failure (RLF). Occurrence of an RLF requires cell reconnection. Hence, frequent occurrence of an RLF leads to degradation in system throughput.

For NR, to suppress occurrence of an RLF, a study is underway to perform, in a case where the quality of a specific beam deteriorates, a procedure of switching to another beam (which may also be referred to as beam recovery (BR), beam failure recovery (BFR), L1/L2 (Layer 1/Layer 2) beam recovery, and the like). Note that the BFR procedure may also be referred to simply as BFR.

Note that a beam failure (BF) in the present disclosure may also be referred to as a link failure and a radio link failure (RLF) .

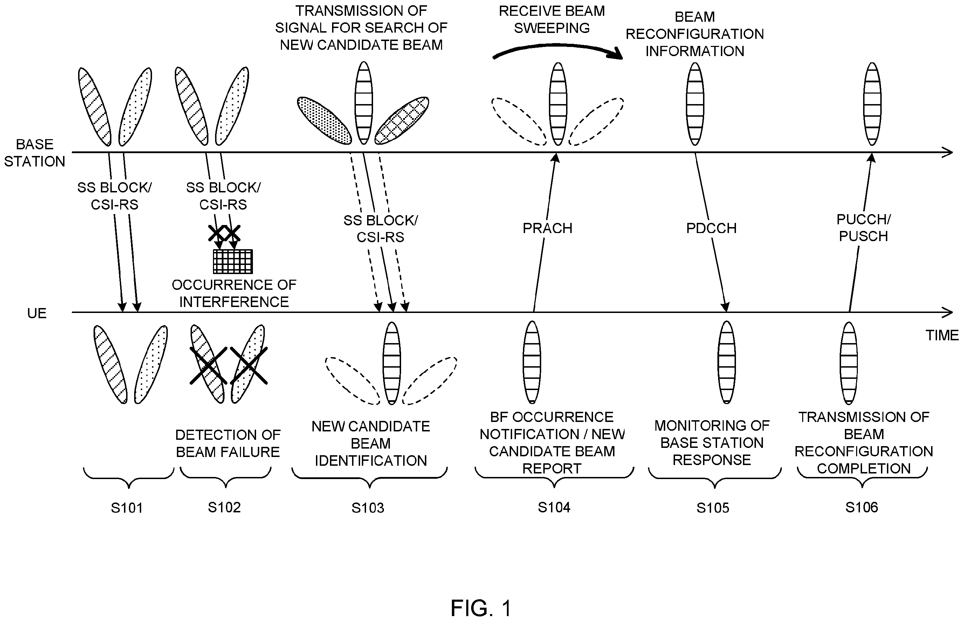

FIG. 1 is a diagram to show an example of a beam recovery procedure in Rel. 15 NR. The number of beams is an example and is not limited to this. In an initial state (step S101) in FIG. 1, a UE performs measurement based on the resources of a reference signal (RS) transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block and the like.

The RS may be at least one of a primary synchronization signal (Primary SS (PSS)), a secondary synchronization signal (Secondary SS (SSS)), a mobility reference signal (Mobility RS (MRS)), a signal included in an SSB, an SSB, a CSI-RS, a demodulation reference signal (DMRS), a beam-specific signal, and the like, or a signal configured by, for example, enhancing or modifying these signals. The RS measured in step S101 may be referred to as an RS for beam failure detection (Beam Failure Detection RS (BFD-RS)) and the like.

In step S102, due to radio waves from a base station being obstructed, the UE fails to detect the BFD-RS (or the reception quality of the RS deteriorates). Such obstruction may be caused by influence of an obstacle, fading, interference, and the like between the UE and the base station, for example.

When a certain condition is satisfied, the UE detects a beam failure. For example, in a case where a block error rate (BLER) is smaller than a threshold for each of all configured BFD-RSs (BFD-RS resource configurations), the UE may detect an occurrence of a beam failure. When detecting an occurrence of a beam failure, a lower layer (physical (PHY) layer) of the UE may notify (indicate) a higher layer (MAC layer) of a beam failure instance.

Note that a criterion (criteria) for determination is not limited to BLER and may be a reference signal received power (Layer 1 Reference Signal Received Power (L1-RSRP)) in the physical layer. Instead of RS measurement or in addition to RS measurement, beam failure detection may be performed based on a downlink control channel (Physical Downlink Control Channel (PDCCH)) and the like. The BFD-RS may be expected to be in a relationship of quasi-co-location (QCL) with a DMRS on the PDCCH monitored by the UE.

Here, QCL is an indicator indicating statistical properties of the channel. For example, when a certain signal/channel and another signal/channel are in a relationship of QCL, this may indicate that it is assumable that at least one of a Doppler shift, a Doppler spread, an average delay, a delay spread, and a spatial parameter (for example, a spatial reception filter/parameter (spatial Rx Filter/Parameter) and a spatial transmission filter/parameter (Spatial Tx Filter/Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the QCL) in the present disclosure may be interpreted as spatial QCL (sQCL).

Information related to the BFD-RS (for example, an RS index, a resource, the number, the number of ports, precoding, and the like), information related to a beam failure detection (BFD) (for example, the above-described threshold), and the like may be configured (notified) for the UE by using higher layer signaling or the like. The information related to the BFR-RS may be referred to as information related to a BFR resource.

In the present disclosure, for example, the higher layer signaling may be any one or combination of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

When the MAC layer of the UE receives beam failure instance notification from the PHY layer of the UE, the MAC layer may start a certain timer (which may be referred to as a beam failure detection timer). When the beam failure instance notification is received a certain number of times (for example, beamFailureInstanceMaxCount configured in RRC) or more before the timer expires, the MAC layer of the UE may trigger BFR (for example, initiate any one of random access procedures to be described later).

When the base station receives no notification from the UE (for example, a time period in which no notification is received exceeds a certain time period), or when the base station receives a certain signal (a beam recovery request in step S104) from the UE, the base station may determine that the UE has detected a beam failure.

In step S103, the UE initiates, for beam recovery, searching of a new candidate beam to be used for new communication. The UE may select, by measuring a certain RS, a new candidate beam corresponding to the RS. The RS measured in step S103 may be referred to as an RS for identification of a new candidate beam (New Candidate Beam Identification RS (NCBI-RS)), CBI-RS, a Candidate Beam RS (CB-RS), and the like. The NCBI-RS may be the same as or different from the BFD-RS. Note that the new candidate beam may be referred to as a novel candidate beam, a candidate beam, or a new beam.

The UE may determine a beam corresponding to an RS satisfying a certain condition, as the new candidate beam. For example, the UE may determine the new candidate beam from among configured NCBI-RSs, based on an RS(s) having an L1-RSRP exceeding a threshold. Note that the criterion (criteria) for determination is not limited to L1-RSRP. The determination may be made by using at least one of L1-RSRP, L1-RSRQ, and L1-SINR (signal-to-noise interference power ratio). The L1-RSRP related to the SSB may be referred to as an SS-RSRP. The L1-RSRP related to the CSI-RS may be referred to as a CSI-RSRP. Similarly, the L1-RSRQ related to the SSB may be referred to as an SS-RSRQ. The L1-RSRQ related to the CSI-RS may be referred to as a CSI-RSRQ. Similarly, the L1-SINR related to the SSB may be referred to as an SS-SINR. The L1-SINR related to the CSI-RS may be referred to as a CSI-SINR.

Information related to the NCBI-RS (for example, an RS resource, the number, the number of ports, precoding, and the like), information related to a new candidate beam identification (NCBI) (for example, the above-described threshold), and the like may be configured (notified) for the UE by using higher layer signaling or the like. The information related to the NCBI-RS may be acquired based on the information related to the BFD-RS. The information related to the NCBI-RS may be referred to as information related to an NCBI resource.

Note that the BFD-RS, the NCBI-RS, and the like may be interpreted as a radio link monitoring reference signal (RLM-RS (Radio Link Monitoring RS)).

In step S104, the UE that has identified the new candidate beam transmits a beam recovery request (Beam Failure Recovery reQuest (BFRQ)). The beam recovery request may be referred to as a beam recovery request signal, a beam failure recovery request signal, and the like.

The BFRQ may be transmitted on a random access channel (Physical Random Access Channel (PRACH)), for example. The BFRQ may include information of the new candidate beam identified in step S103. The resource for the BFRQ may be associated with the new candidate beam. Information of a beam may be notified by using a beam index (BI), the port index of a certain reference signal, a resource index (for example, a CSI-RS resource indicator (CRI)), an SSB resource indicator (SSBRI), or the like.

In Rel. 15 NR, a CB-BFR (Contention-Based BFR), which is a BFR based on a contention-based random access (RA) procedure, and a CF-BFR (Contention-Free BFR), which is a BFR based on a contention-free random access procedure, are supported. In the CB-BFR and the CF-BFR, the UE may transmit, as the BFRQ, a preamble (also referred to as an RA preamble, a random access channel (Physical Random Access Channel (PRACH)), a RACH preamble, and the like) by using a PRACH resource.

In step S105, the base station that has detected the BFRQ transmits a response signal for the BFRQ from the UE (which may be referred to as a BFR response, a gNB response, and the like). The response signal may include reconfiguration information about one or a plurality of beams (for example, configuration information of a DL-RS resource(s)).

The response signal may be transmitted in a UE common search space on a PDCCH, for example. The response signal may be notified on a PDCCH (DCI) having a cyclic redundancy check (CRC) scrambled with the identifier of the UE (for example, a cell-radio RNTI (C-RNTI)). The UE may determine at least one of a transmit beam and a receive beam to be used, based on the beam reconfiguration information.

The UE may monitor the response signal, based on at least one of a control resource set (CORESET) for the BFR and a search space set for the BFR. For example, the UE may detect DCI having a CRC scrambled with the C-RNTI, in the BFR search space in a CORESET configured individually.

For the CB-BFR, when the UE has received a PDCCH corresponding to a C-RNTI related to the UE itself, it may be determined that contention resolution has been successful.

For the processing in step S105, a period for the UE to monitor a response from the base station (for example, the gNB) for the BFRQ may be configured. The period may be referred to as a gNB response window, a gNB window, a beam recovery request response window, a BFRQ response window, and the like, for example. When no gNB response is detected in the window period, the UE may retransmit the BFRQ.

In step S106, the UE may transmit a message indicating that a beam reconfiguration is completed, to the base station. The message may be transmitted on the PUCCH or may be transmitted on the PUSCH, for example.

In step S106, the UE may receive RRC signaling indicating a configuration of a Transmission Configuration Indication state (TCI state) to be used for the PDCCH or may receive a MAC CE indicating activation of the configuration.

Beam recovery success (BR success) may represent a case of reaching to step S106, for example. Meanwhile, beam recovery failure (BR failure) may correspond to a case where the number of times of BFRQ transmission has reached a certain number or a beam-failure-recovery-timer is expired, for example.

Note that the numbers assigned to the steps are merely numbers given for description, and a plurality of steps may be integrated, or steps may be performed in a different order. Whether or not to perform BFR may be configured for the UE through higher layer signaling.

For future radio communication systems (for example, Rel. 16 or later versions), a study is underway to perform, when a beam failure is detected, notification of an occurrence of the beam failure and reporting of information related to the cell (or the CC) in which the beam failure is detected and information related to a new candidate beam, by using an uplink control channel (PUCCH) and MAC control information (MAC CE).

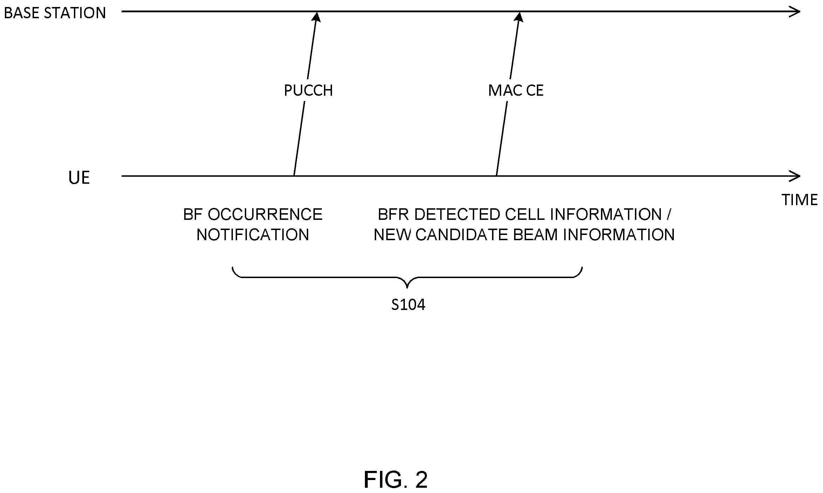

For example, it is conceivable that the UE performs, after a beam failure is detected, notification of an occurrence of the beam failure and reporting of information related to the cell in which the beam failure is detected and information related to a new candidate beam, through one or more steps (for example, two steps) (refer to FIG. 2). Note that such a reporting operation is not limited to two steps.

A resource(s) can be configured for the uplink control channel more flexibly than for the PRACH, in the time domain. For this reason, using the uplink control channel (PUCCH) as a channel used for transmission of the BFRQ is effective. A resource(s) can be configured for the MAC CE (PUSCH) more flexibly than for the PRACH, in the time domain. For this reason, using the MAC CE (PUSCH) as a channel used for transmission of the BFRQ is effective.

In FIG. 2, the UE notifies of the occurrence of the beam failure on the uplink control channel (PUCCH) in the first step (or step 1). It is assumed that the UE reports at least one of the information related to the cell in which the beam failure is detected and the information related to the new candidate beam, by using MAC control information (for example, a MAC CE or a MAC PDU including a MAC CE) in a second step (or step 2).

In the following description, information transmitted in the first step is also referred to as first information, and information transmitted in the second step is also referred to as second information.

A method similar to that for transmission of a scheduling request (SR) may be used for the PUCCH in the first step. For example, the UE may use an SR to transmit the first information for notifying occurrence of a beam failure in the BFR procedure. The SR used for notification of occurrence of a beam failure may be referred to as an SR for BFR, an SR for BFR of an SCell, a dedicated SR for SCell, or a dedicated SR.

The MAC CE (or the MAC PDU) in the second step may be transmitted by using an uplink resource. For example, the UE may use an uplink resource allocated by the base station through PUCCH (for example, dedicated SR-like PUCCH) transmission in the first step, to transmit the MAC CE.

The uplink resource may be interpreted as a resource (UL-SCH resource) for a logical uplink channel (for example, an uplink shared channel (UL-SCH)), a resource for a physical uplink channel (for example, a physical uplink shared channel), or the like.

The format of the PUCCH used for the first step may be, for example, PUCCH format (PF) 0 or 1. The PUCCH transmission in the first step may be performed in a certain cell (for example, a primary cell (PCell) or a primary secondary cell (PSCell)). FP0 may be configured of one or two symbols. Meanwhile, FP1 may be configured of four or more symbols.

The PUCCH resource for BFR of an SCell in the first step may be commonly configured for all SCells included in a certain group (for example, the same cell group). In a case where the UE has detected a beam failure and has received, before PUCCH (or SR) transmission in the first step, a UL grant in a cell in which a MAC CE for BFR can be transmitted, the UE may not necessarily perform PUCCH transmission in the first step.

Even in a case where the UE has detected a beam failure, the UE may include information of the cell in which the beam failure has been detected in the MAC CE in the second step without including the index of a new candidate beam in a case where no new candidate beam is identified. The case where no new candidate beam is identified may be, for example, a case where there is no reference signal having a received power (RSRP) of a certain value or higher.

### <Configuration of Priority>

For NR of Rel. 16 or later versions, it is under study to configure priority for each of a plurality of levels (for example, two levels) for a certain signal or channel. For example, it is assumed to configure different priority for each of signals or channels corresponding to different respective traffic types (also referred to as services, service types, communication types, use cases, and the like), to control communication (for example, transmission control at the time of collision or the like). With this, it is possible to configure different priority for the same signal or channel according to service type or the like, to control communication.

The priority may be configured for a signal (for example, UCI such as an HARQ-ACK, a reference signal, or the like), a channel (PDSCH, PUSCH, or the like), an HARQ-ACK codebook, or the like. The priority may be defined with first priority (for example, High) and second priority (for example, Low), which is lower priority than the first priority. Alternatively, three or more kinds of priority may be configured. The information related to the priority is notified from the base station to the UE, by using at least one of higher layer signaling and DCI.

For example, priority may be configured for UCI (for example, at least one of a scheduling request, CSI, and an HARQ-ACK). The priority may be configured for an HARQ-ACK codebook corresponding to the HARQ-ACKs. Alternatively, priority may be configured for a PUSCH used for transmission of a certain MAC CE. Note that, in a case where priority is configured for the PUSCH, priority of information or a signal (for example, a MAC CE, CSI, or the like) transmitted on the PUSCH may be interpreted as priority of the

### PUSCH.

The priority may be configured for a dynamic grant based PUSCH, a configured grant based PUSCH, and the like.

The UE may control UL transmission, based on priority, in a case where different UL signals / UL channels collide with each other. For example, the UE may perform such control as to perform UL transmission with high priority while not performing (for example, dropping) UL transmission with low priority. Alternatively, transmission timing of UL transmission with low priority may be changed (for example, postponed delayed or shifted).

Different UL signals / UL channels colliding with each other may be a case where time resources (or time resources and frequency resources) of different UL signals / UL channels overlap each other or a case where transmission timings of different UL signals / UL channels overlap each other.

As described above, in a case where priority is configured for UL transmissions, it is assumed that priority is also configured for UL transmissions (for example, the first information in step 1, the second information in step 2, and the like) in the BFR procedure.

The traffic types may be identified based on at least one of the followings in a physical layer.
- Physical channel having different priority
- Logical channel having different priority
- Modulation and coding scheme (MCS) table (MCS index table)
- Channel quality indication (CQI) table
- DCI format
- Radio network temporary identifier (RNTI) (for example, System Information (SI)-RNTI) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Field in DCI (for example, a newly added field or reuse of an existing field)

Each traffic type may be associated with a communication requirement (a requirement or a required condition such as latency or an error rate), a data type (audio, data, or the like), or the like. Traffic types (also referred to as types, services, service types, communication types, use cases, and the like) such as further enhanced mobile broadband (for example, enhanced Mobile Broadband (eMBB)), machine type communication enabling multiple simultaneous connections (for example, massive Machine Type Communications (mMTC), Internet of Things (IoT)), and highly reliable and low latency communication (for example, Ultra-Reliable and Low-Latency Communications (URLLC)) are assumed.

The priority of URLLC may be higher than priority of eMBB. Priority of URLLC may be configured to be "high" (high priority), while priority of the eMBB is configured to be "low" (low priority). The difference between the requirement of URLLC and the requirement of eMBB may be that latency of URLLC is lower than latency of eMBB or may be that the requirement of URLLC includes the requirement of reliability.

### <PUCCH Format>

For future radio communication systems (for example, Rel. 15 or later versions, 5G, NR, and the like), a configuration (also referred to as a format, a PUCCH format (PF), and the like) for an uplink control channel (for example, a PUCCH) used for transmission of uplink control information (UCI) is studied. For example, in Rel. 15 NR, PF0 to PF4 are supported. Note that the names of PFs given below are merely examples, and different names may be used.

For example, PF0 and PF1 are PFs used for transmission of UCI of up to 2 bits. For example, UCI may be at least one of transmission confirmation information (also referred to as Hybrid Automatic Repeat reQuest-Acknowledgement (HARQ-ACK), acknowledgement (ACK), negative-acknowledgement (NACK), or the like) and a scheduling request (SR). PF0, with which allocation to one or two symbols is possible, is also referred to as a short PUCCH, a sequence-based short PUCCH, and the like. In contrast, PF1, with which allocation to four to 14 symbols is possible, is also referred to as a long PUCCH and the like. PF0 may use cyclic shift (CS) corresponding to a value of UCI to transmit a sequence obtained by the cyclic shift of a base sequence. In PF1, code division multiplexing (CDM) may be performed for a plurality of UEs in the same physical resource block (PRB) through time domain block-wise spreading using at least one of CS and time domain (TD)-orthogonal cover code (OCC). PF0 and PF1 may be mapped to one PRB.

PF2 to PF4 are each a PF used for transmission of UCI of more than 2 bits (for example, channel state information (CSI) or at least one of CSI, an HARQ-ACK, and an SR). PF2, with which allocation to one or two symbols is possible, is also referred to as a short PUCCH and the like. In contrast, PF3 and PF4, with which allocation to four to 14 symbols is possible, are each also referred to as a long PUCCH and the like. In PF4, CDM may be performed for a plurality of UEs through block-wise spreading of (frequency domain (FD)-OCC) before DFT. PF2 and PF3 may be mapped to one to 16 PRBs. PF4 may be mapped to one PRB.

Intra-slot frequency hopping may be applied to PF1, PF3, and PF4. Assume that the length of a PUCCH is N_{symb}, the length before frequency hopping (first hop) may be floor (N_{symb}/2), and the length after the frequency hopping (second hop) may be ceil (N_{symb}/2).

The waveforms of PF0, PF1, and PF2 may correspond to Cyclic Prefix (CP)-Orthogonal Frequency Division Multiplexing (OFDM) (transform precoding may be disabled). The waveforms of PF3 and PF4 may correspond to Discrete Fourier Transform (DFT)-spread(s)-OFDM (transform precoding may be enabled).

### <PUCCH Resource>

Allocation of a resource (PUCCH resource) to be used for transmission of a PUCCH is performed by using higher layer signaling and/or downlink control information (DCI). Here, the higher layer signaling may be, for example, at least one of RRC (Radio Resource Control) signaling, system information (for example, at least one of RMSI (Remaining Minimum System Information), OSI (Other System Information), and MIB (Master Information Block), SIB (System Information Block)), and broadcast information (PBCH (Physical Broadcast Channel)).

Specifically, a UE after RRC connection set-up is notified of (configured with) one or more sets (PUCCH resource sets) each including one or more PUCCH resources, through higher layer signaling. For example, the UE may be notified of K (for example, 1 ≤ K ≤ 4) PUCCH resource sets by a radio base station. Each PUCCH resource set may include M (for example, 1 ≤ M ≤ 32) PUCCH resources.

The UE may determine a single PUCCH resource set from the K configured PUCCH resource sets, based on the payload size of UCI (UCI payload size, the number of UCI information bits). The UCI payload size may be the number of bits of UCI not including cyclic redundancy check (CRC) bits.

The UE may determine a PUCCH resource to be used for transmission of the UCI (for example, an HARQ-ACK) from the M PUCCH resources included in the determined PUCCH resource set, based on at least one of the value of a PUCCH resouce indicator (PRI) field in specific DCI (latest DCI format 1_0 or 1_1 of DCI format 1_0 or 1_1), the number of control channel elements (CCEs) in a control resource set (CORESET) for PDCCH reception carrying the specific DCI, and the start CCE index of the PDCCH reception carrying the specific DCI.

Each PUCCH resource configured for the UE may include at least one of the following parameters (also referred to as fields or information, or the like). Note that a range of possible values for each PUCCH format may be defined for each parameter.
- Symbol at which allocation for a PUCCH is started (start symbol)
- Number of symbols allocated to the PUCCH in a slot (period allocated to the PUCCH)
- Index of a resource block (physical resource block (PRB)) at which the allocation for the PUCCH is started
- Number of PRBs allocated to the PUCCH
- Whether or not to enable frequency hopping for the PUCCH
- Frequency resource for the second hop when the frequency hopping is enabled, and the index of initial cyclic shift (CS)
- Index of time-domain orthogonal cover code (for example, OCC (Orthogonal Cover Code)) and the length of OCC used for block-wise spreading before discrete Fourier transform (DFT) (also referred to as an OCC length, a spreading rate, and the like)
- Index of OCC used for block-wise spreading after DFT

### <SR Resource>

In NR, a base station allocates an uplink resource to a UE in response to a request (scheduling request (SR)) from the UE. Note that the uplink resource may be interpreted as a resource (UL-SCH resource) for a logical uplink channel (for example, an uplink shared channel (UL-SCH)), a resource for a physical uplink channel (for example, a physical uplink shared channel), or the like.

The UE may transmit the SR by using an uplink control channel (for example, a PUCCH). The format of the PUCCH used for the transmission of the SR may be, for example, PUCCH format (PF) 0 or 1.

A certain period for SR transmission using a PUCCH (also referred to as a transmission occasion, an SR transmission occasion, an SR occasion, a transmission period, an instance, and the like) may be provided at certain periodicity. The SR occasion may be configured in a UE-specific manner.

The UE (or a Medium Access Control (MAC) entity of the UE) may be configured with zero, or one or more configurations for SR (for example, SR configurations). One SR configuration may configure a set of one or more resources for SR transmission (SR resources) (or may be associated with the set). The SR resource may be configured over at least one of one or more bandwidth parts (BWPs) and one or more cells (also referred to as serving cells, component carriers (CCs), carriers, and the like). One SR resource at maximum may be configured for one logical channel in each BWP.

Each SR configuration may correspond to one or more logical channels (LCHs). Each LCH may be mapped to zero or one SR configuration. The SR configuration may be configured for the UE through higher layer signaling (for example, Radio Resource Control (RRC) signaling). Each LCH may have a value indicating priority. Note that the SR configuration may be referred to simply as an SR in the present disclosure.

The UE may receive information related to a set of one or more SR configurations (SR configuration set information). The SR configuration set information may be, for example, an RRC control element (Information Element (IE)) "SchedulingRequestConfig." The SR configuration set information may be configured for each cell group and may be included, for example, in an RRC IE "MAC-CellGroupConfig." The SR configuration set information may be configured as a MAC parameter. Note that the RRC IE may be referred to as an RRC parameter, a higher layer parameter, or the like.

Each piece of SR configuration information (for example, an RRC IE "SchedulingRequestToAddMod") may include at least one of the following parameters.
- Identifier (SR-ID, for example, an RRC IE "schedulingRequestId") of SR configuration information (or an SR configuration)
- Timer (for example, an RRC IE "sr-ProhibitTimer") for SR transmission in PUCCH
- Maximum number of SR transmissions (for example, an RRC IE "sr-TransMax")

The SR-ID in each piece of SR configuration information may be used for identification of an instance of the SR (SR configuration) in the MAC layer. The SR-ID may be included in configuration information of an LCH (LCH configuration information, for example, an RRC IE "LogicalChannelConfig"). In other words, the SR-ID may be used as an identifier of the SR configuration associated with the LCH.

The UE may receive information (SR resource information) related to an SR resource associated with each SR configuration. The SR resource information may be, for example, an RRC IE "SchedulingRequestResourceConfig."

The SR resource information may be configured as a UE-specific PUCCH parameter. The SR resource information may be included in configuration information of a PUCCH (PUCCH configuration information, for example, an RRC IE "PUCCH-Config") for each BWP. The PUCCH configuration information may include a list of one or more pieces of SR resource information (for example, an RRC IE "schedulingRequestResourceToAddModList."

The SR resource information may include, for example, at least one of the following parameters.
- Identifier of SR resource information (SR resource ID, for example, an RRC IE "schedulingRequestResourceId")
- Identifier of SR configuration information (or SR configuration) using the SR resource (SR-ID, for example, an RRC IE "schedulingRequestID")
- Information (periodicity/offset information, for example, an RRC IE "periodicityAndOffset") indicating at least one of periodicity and offset of SR resource (also referred to as an SR occasion and the like)
- Identifier of PUCCH resource (PUCCH resource ID, for example, an RRC IE "PUCCH-ResourceId")

The SR resource configured using the SR resource information may be associated with the SR configuration information (or an SR configuration) identified by the SR-ID. Note that the SR resource may include at least one of the SR occasion, the PUCCH resource, and the like.

The periodicity may be, for example, two or seven symbols, or one, two, four, five, eight, ten, 16, 20, 40, 80, 160, 320, or 640 slots. A set of possible values for each subcarrier spacing (SCS) may be defined for the periodicity.

The UE may use the PUCCH resource indicated by the PUCCH resource ID in an SR occasion at certain periodicity determined based on the periodicity/offset information, to transmit the SR. The UE may control the transmission of the SR, based on SR configuration information indicated by the SR-ID.

### <Collision of SR and Another UL Transmission>

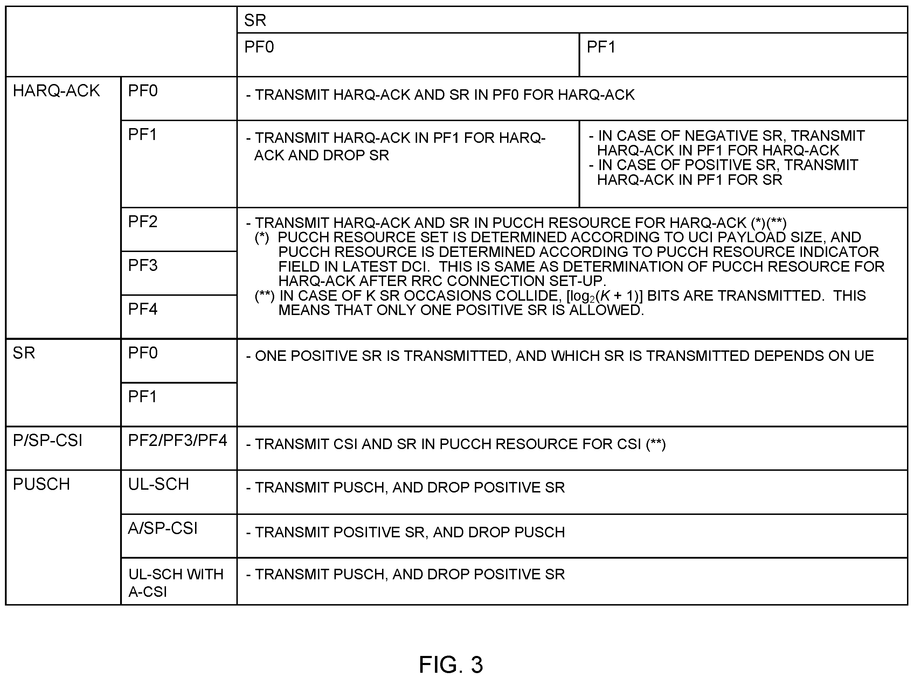

In Rel. 15 NR, in a case where an SR and another UL transmission of a single UE (intra-UE) overlap each other in time, the UE controls the SR and such another UL transmission in accordance with a rule shown in FIG. 3.

In a case where an SR using PF0 or PF1 collides with an HARQ-ACK using PF0, the UE transmits (multiplexes) the HARQ-ACK and the SR in the PUCCH resource of PF0 for the HARQ-ACK.

In a case where an SR using PF0 collides with an HARQ-ACK using PF1, the UE transmits the HARQ-ACK in the PUCCH resource of PF1 for the HARQ-ACK and drops the SR.

In a case where an SR using PF1 collides with an HARQ-ACK using PF1, the UE transmits the HARQ-ACK in the PUCCH resource of PF1 for the HARQ-ACK when the SR is a negative SR while transmitting the HARQ-ACK in the PUCCH resource of PF1 for the SR when the SR is a positive SR.

In a case where an SR using PF0 or PF1 collides with an HARQ-ACK using PF2, PF3, or PF4, the UE transmits (multiplexes) the HARQ-ACK and the SR in the PUCCH resource for the HARQ-ACK. Here, the PUCCH resource set is determined according to UCI payload size, and the PUCCH resource for the HARQ-ACK is determined according to the PUCCH resource indicator field in the latest DCI. This is the same as determination of PUCCH resource for the HARQ-ACK after RRC connection set-up. In a case where K SR occasions collide with each other, ceil(log₂(K + 1)) bits are transmitted. This means that only one positive SR is allowed.

In a case where an SR using PF0 or PF1 collides with an SR using PF0 or PF1, the UE transmits one positive SR. Which SR is to be transmitted depends on the UE.

In a case where an SR using PF0 or PF1 collides with a periodic (P)-channel state information (CSI) report or a semi-persistent (SP)-CSI report using PF2, PF3, or PF4, the UE transmits (multiplexes) the CSI report and the SR in the PUCCH resource for CSI.

In a case where an SR using PF0 or PF1 collides with a PUSCH with a UL-shared channel (SCH), the UE transmits the PUSCH and drops the positive SR.

In a case where an SR using PF0 or PF1 collides with a PUSCH with an aperiodic (A)-CSI report or an SP-CSI report, the UE transmits a positive SR and drops the PUSCH.

In a case where an SR using PF0 or PF1 collides with a PUSCH with a UL-SCH and A-CSI, the UE transmits the PUSCH and drops a positive SR.

In the present disclosure, collide, conflict, and overlap may be interchangeably interpreted. In the present disclosure, drop, puncture, cancel, no transmission may be interchangeably interpreted.

In the present disclosure, a UL-SCH and UL data may be interchangeably interpreted.

However, UE operation in a case where priority is given to each of two UL transmissions and the two UL transmissions overlap each other in time is not made clear. For example, UE operation in a case where PUCCH-BFR and another UL transmission overlap each other in time is not made clear. For example, UE operation in a case where two UL transmissions in different cell groups overlap each other in time is not made clear. If such UE operation is not made clear, this may cause reduction in system performance such as reduction in throughput.

In view of these, the inventors of the present invention came up with the idea of UE operation in a case where two UL transmissions each given priority overlap each other in time.

Embodiments according to the present disclosure will be described in detail with reference to the drawings as follows. The following aspects may each be employed individually, or may be employed in combination.

Note that, in the following description, operation related to an SR of an existing system (for example, Rel. 15) may be applied to operation with no particular description about a normal SR.

Although the first priority (High) and the second priority (Low) are used as examples of priority in the following description, the number and types of priorities are not limited to these. Three or more kinds (or three or more levels) of priority may be applied. Priority configured for each signal or channel may be configured for the UE through higher layer signaling or the like.

### (First Aspect)

The UE may receive information (for example, higher layer signaling, SR resource configuration information (SchedulingRequestResourceConfig) in PUCCH configuration information (PUCCH-Config)) indicating priority (first priority) of PUCCH-BFR (first UL transmission, first information). The UE may receive information (for example, higher layer signaling) indicating priority (second priority) of another UL transmission (second UL transmission). In a case where the PUCCH-BFR (the SR resource for the PUCCH-BFR) and such another UL transmission overlap with each other in time, the UE may control the PUCCH-BFR and such another UL transmission, based on the first priority and the second priority.

In the present disclosure, a PUCCH-BFR, an SR for PUCCH-BFR, an SR resource for PUCCH-BFR, an SR used for PUCCH-BFR, an SR for BFR, a PUCCH for BFR, a beam failure recovery request (BFRQ), first information, and information transmitted in the first step may be interchangeably interpreted.

In the present disclosure, an SR for UL grant request, a normal SR, and an SR of an existing system (Rel. 15) may be interchangeably interpreted.

In a case where the PUCCH-BFR resource and another UL transmission resource overlap with each other in time within one cell group, the UE may control the PUCCH-BFR and such another UL transmission, in accordance with at least one of operations 1 to 3 below. The cell group may be a master cell group (MCG), a secondary cell group (SCG), or a PUCCH cell group.

### [Operation 1]

In a case where the PUCCH-BFR resource is configured with high priority, the UE may drop such another UL transmission configured with low priority except at least one of physical random access channel (PRACH) transmission and a PUSCH scheduled by a random access response (RAR) UL grant.

### [Operation 2]

In a case where such another UL transmission is at least one of PRACH transmission and a PUSCH scheduled by a RAR UL grant, which one of the PUCCH-BFR and such another UL transmission is prioritized may depend on implementation of the UE, at least one of the PRACH transmission and the PUSCH scheduled by the RAR UL grant may always be prioritized, or the PUCCH-BFR may always be prioritized.

In a case where the PUCCH-BFR resource is configured with low priority and another UL transmission satisfies a priority condition, the UE may drop the PUCCH-BFR. The priority condition may be at least one of the followings: such another UL transmission to be configured with high priority is configured with high priority; and such another UL transmission is at least one of the PRACH transmission and the PUSCH scheduled by the RAR UL grant.

### [Operation 3]

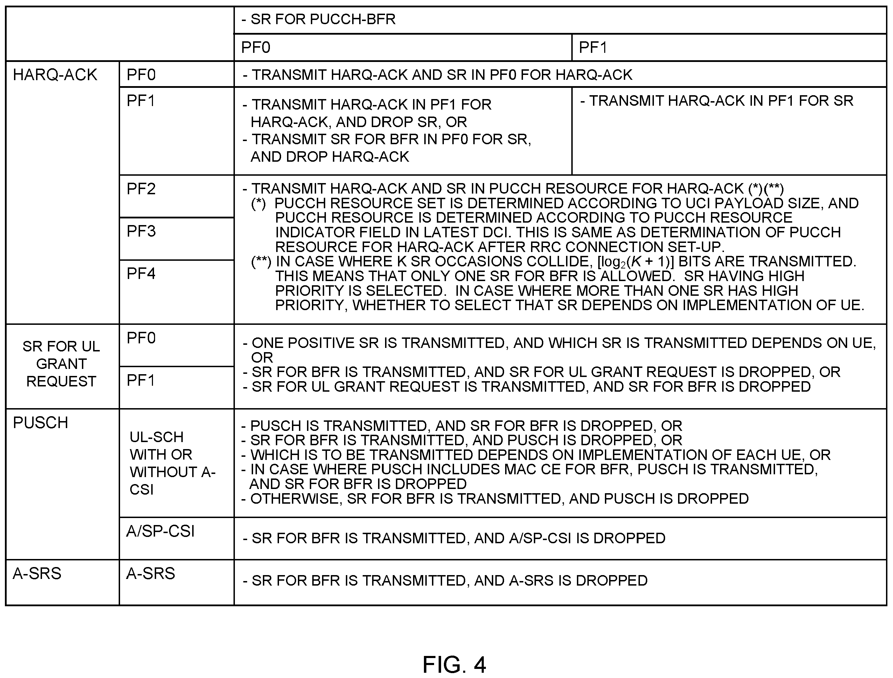

In a case where the PUCCH-BFR resource is configured with the same priority as a priority of another UL transmission, the UE may control the PUCCH-BFR and such another UL transmission in accordance with a rule. This rule may be, for example, the rule shown in FIG. 4.

In a case where an SR for PUCCH-BFR using PF0 or PF1 collides with an HARQ-ACK using PF0, the UE may transmit (multiplex) the HARQ-ACK and the SR for PUCCH-BFR in the PUCCH resource of PF0 for the HARQ-ACK.

In a case where an SR for PUCCH-BFR using PF0 collides with an HARQ-ACK using PF1, the UE may transmit the HARQ-ACK in the PUCCH resource of PF1 for the HARQ-ACK and drops the SR for PUCCH-BFR or may transmit the SR for PUCCH-BFR in the PUCCH resource of PF0 for PUCCH-BFR and drop the HARQ-ACK.

In a case where an SR for PUCCH-BFR using PF1 collides with an HARQ-ACK using PF1, the UE may transmit the HARQ-ACK in the PUCCH resource of PF1 for the SR for PUCCH-BFR.

In a case where an SR for PUCCH-BFR using PF0 or PF1 collides with an HARQ-ACK using PF2, PF3, or PF4, the UE may transmit (multiplex) the HARQ-ACK and the SR for PUCCH-BFR in the PUCCH resource for the HARQ-ACK. Here, the PUCCH resource set may be determined according to UCI payload size, and the PUCCH resource for the HARQ-ACK is determined according to the PUCCH resource indicator field in the latest DCI. This may be the same as determination of a PUCCH resource for an HARQ-ACK after RRC connection set-up. In a case where K SR occasions for the SR for PUCCH-BFR collide with each other, ceil(log₂(K + 1)) bits may be transmitted. This may mean that only one SR for PUCCH-BFR is allowed. The UE may select an SR having high priority. In a case where more than one SR has high priority, which SR is to be selected may depend on implementation of the UE.

In a case where the SR for PUCCH-BFR using PF0 or PF1 collides with an SR for UL grant request using PF0 or PF1, the UE may transmit one positive SR (the SR for PUCCH-BFR or the SR for UL grant request) and which SR is to be transmitted may depend on the UE, the UE may transmit the SR for PUCCH-BFR and drop the SR for UL grant request, or the UE may transmit the SR for UL grant request and drop the SR for PUCCH-BFR.

In a case where the SR for PUCCH-BFR using PF0 or PF1 collides with a PUSCH having a UL-SCH with an A-CSI report or a PUSCH having a UL-SCH without an A-CSI report, the UE may transmit the PUSCH and drop the SR for PUCCH-BFR, the UE may transmit the SR for PUCCH-BFR and drop the PUSCH, the UE may transmit the SR for PUCCH-BFR and drop the PUSCH, or which one is to be transmitted may depend on implementation of each UE. If the PUSCH includes a MAC CE for BFR, the UE may transmit the PUSCH and drop the SR for PUCCH-BFR; otherwise, the UE may transmit the SR for PUCCH-BFR and drop the PUSCH.

In a case where the SR for PUCCH-BFR using PF0 or PF1 collides with the PUSCH with the A-CSI report or the SP-CSI report, the UE may transmit the SR for PUCCH-BFR and drop the A-CSI report, the SP-CSI report, or the PUSCH.

In a case where the SR for PUCCH-BFR using PF0 or PF1 collides with an aperiodic (A)-sounding reference signal (SRS), the UE may transmit the SR for PUCCH-BFR and drop the A-SRS.

According to this aspect, even in a case where the SR for PUCCH-BFR and another UL transmission overlap each other in time, the UE can appropriately control transmission of the SR for PUCCH-BFR and such another UL transmission.

### (Second Aspect)

A UE may receive information (for example, higher layer signaling) indicating priority (first priority) of UL transmission (first UL transmission) in a first cell group. The UE may receive information (for example, higher layer signaling) indicating priority (second priority) of UL transmission (first UL transmission) in a second cell group. In a case where the first UL transmission and the second UL transmission overlap with each other in time, the UE may control the first UL transmission and the second UL transmission, based on the first priority and the second priority.

The UE may determine power allocation of UL transmissions in a plurality of cell groups in accordance with power allocation methods 1 to 3 below. Each of the plurality of cell groups may be a master cell group (MCG), a secondary cell group (SCG), or a PUCCH cell group.

### [Power Allocation Method 1]

The UE may prioritize power of UL transmission in a cell group (the MCG or the first PUCCH cell group) including the PCell, irrespective of priorities of the UL transmissions.

### [Power Allocation Method 2]

Firstly, the UE may prioritize the power of the UL transmission configured or indicated to be high priority. Secondly, if both UCI and PUSCH transmission have high priority, the UE may prioritize the power of UCI transmission. Thirdly, if UL transmissions having high priority involve two or more cell groups, the UE may prioritize the power of the UL transmission in the cell group having the PCell.

### [Power Allocation Method 3]

Firstly, the UE may prioritize the power of the UL transmission configured or indicated to be high priority. Secondly, if UL transmissions having high priority involve two or more cell groups, the UE may prioritize the power of the UL transmission in the cell group having the PCell. Thirdly, if both UCI and PUSCH transmission have high priority, the UE may prioritize the power of UCI transmission.

In a case where the UE is in a power-limited state (in power-limited) and the power of the UL transmission in the first cell group is prioritized over the power of the UL transmission in the second cell group in accordance with any of power allocation methods 1 to 3, the UE may scale the power of the UL transmission in the second cell group so that the total transmission power of the UE does not exceed allowable maximum transmission power of all the cell groups. Note that adjusting the power may mean reducing the power of part of UL transmissions so that the total transmission power does not exceed (is the same as) the maximum transmission power (or the allowable maximum transmission power).

The power-limited state may be a state in which the allowable maximum transmission power is reached at the timing of the UE attempting transmission, from the viewpoint of at least one of the serving cell, the Timing Advance Group (TAG), the cell group, and the UE. For example, the power-limited state may be a case where the total transmission power of the UE reaches (exceeds) the maximum transmission power (or the allowable maximum transmission power) in a case where the UE attempts to transmit a plurality of UL transmissions (channels or signals) in the same symbol. For example, the power-limited state may be that the transmission power of UL transmissions is limited as result of transmission of UL transmissions exceeding the allowable maximum transmission power of the UE is requested. In other words, the power-limited state may be that the sum of the transmission powers necessary for an uplink signal for the master base station (Master Cell Group (MCG)) and the UL transmission for the secondary base station (Secondary Cell Group (SCG)) exceeds the allowable maximum transmission power of the UE. Here, the necessary transmission power (also referred to as desired power, desired transmission power, and the like) includes required power (required transmission power) notified by the base station and transmission power obtained by increasing through application of power-ramping based on the required power.

The state in which the UE is power limited may be interpreted as a case where the UE has detected (determined) a power-limited state. The total transmission power may be the total of transmission powers of all the cell groups and all the serving cells (CCs) or may be the total of transmission power used for the UE over all the serving cells in the frequency range (such as FR1 and FR2) over all the cell groups. The total transmission power may be interpreted as allowable maximum transmission power, a power limitation value, a maximum total transmission power, P-Max, p-UE, p-UE-FR1, p-UE-FR2, the maximum total transmission power used for the UE over all the serving cells in the frequency range (such as FR1 and FR2) over all the cell groups, and the like. The UE may be configured with the allowable maximum transmission power through higher layer signaling. Scaling of power may be interpreted as scaling-down, power scaling, and the like.

According to this aspect, even in a case where a plurality of UL transmissions in different cell groups overlap each other in time, it is possible to appropriately allocate the transmission power to the plurality of UL transmissions.

### (Third Aspect)

In this aspect, a description will be given of a method of configuring priority of second information to be used for notification of at least one of a cell in which a beam failure is detected and a new candidate beam. Note that the priority of the second information may be interpreted as the priority of the MAC CE (for example, a subsequent MAC CE) including the second information or the priority of the PUSCH used for the transmission of the second information.

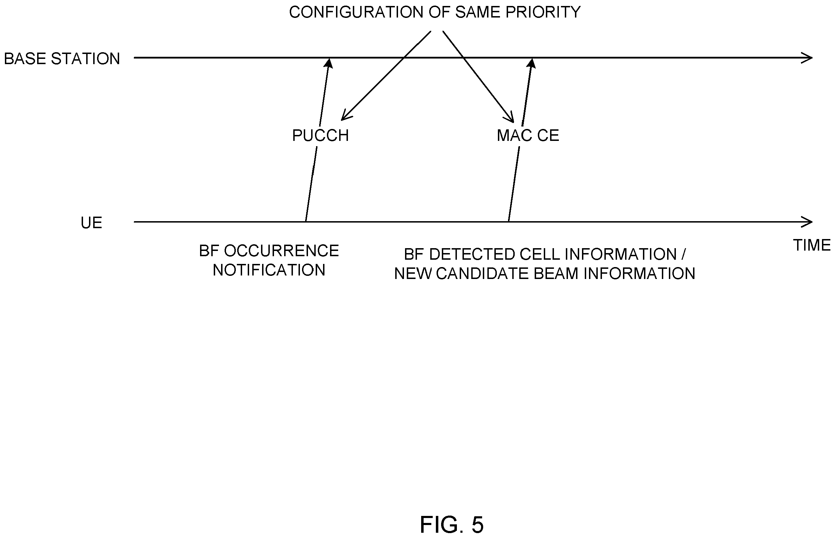

In a case where the transmissions of the first information and the second information are supported by the UE after a beam failure is detected, the priority of the second information may be configured to be the same as the priority of the first information (option 1-1) (refer to FIG. 5). Note that the priority of the first information may be interpreted as the priority of the PUCCH resource for BFR (for example, a PUCCH-BFR resource) used for the transmission of the first information or the priority of the PUCCH for BFR.

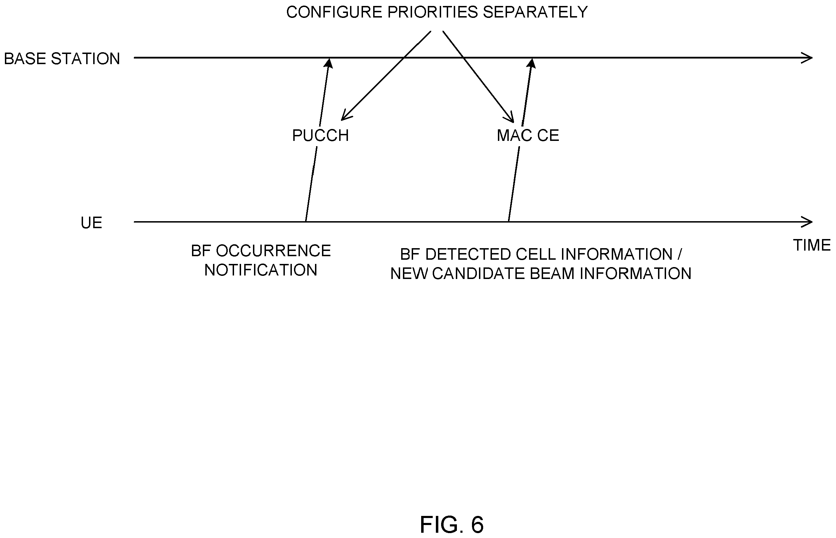

Alternatively, the priority of the second information may be configured separately from the priority of the first information (refer to FIG. 6). In this case, the priority of the second information may have a fixed value irrespective of the priority of the first information (option 1-2). Alternatively, the priority of the second information may be configured based on certain information or a certain condition (option 1-3). Alternatively, the priority of the first information and the priority of the second information may be configured separately based on at least one of higher layer signaling and downlink control information (option 1-4).

### <Option 1-1>

The UE may determine that the priority of the second information is the same as the priority of the first information and control the transmission of the second information (refer to FIG. 5). For example, in a case where the first information (for example, the PUCCH resource for BFR) corresponding to second control information is configured to have the first priority (high), the UE may assume that the second information is also configured to have the first priority.

Alternatively, in a case where the first information corresponding to second control information is configured to have the second priority (low), the UE may assume that the second information is also configured to have the second priority.

The UE may be notified of or configured with the priority of the first information by the network through higher layer signaling or the like. The priority of the first information (the PUCCH resource for BFR) may be the same as the priority configured for a resource for a scheduling request (or a PUCCH resource for an SR) or may be configured separately from that of the PUCCH resource for the SR.

By configuring the priority of the second information to be the same as the priority of the first information, it is possible to configure the priority of the second information to be high in a case where the priority of the first information is high and hence to configure the priorities of UL transmissions associated with a beam failure to be the same. Moreover, since the UE can determine the second priority, based on the first priority, it is not necessary to notify the UE of the second priority, which can simplify determination in the UE.

### <Option 1-2>

The priority of the second information may be configured or defined in a fixed manner irrespective of the priority of the first information. Note that the priority of the second information may always be configured in a fixed manner (or to have a fixed value) or may be configured in a fixed manner under a certain condition. The certain condition may be a case where the UE is not notified of or configured with the priority of the second information through higher layer signaling or the like.

For example, the priority of the second information may always be the first priority (high). The UE may assume that the priority of the second information is the first priority irrespective of whether the priority of the first information is configured to be the first priority (high) or the second priority (low). In a case of not receiving information related to the priority of the second information through higher layer signaling, the UE may determine that the priority of the second information is the first priority. By configuring the priority of the second information to be high, it is possible to perform a BFR procedure with priority.

Alternatively, the priority of the second information may always be the second priority (low). The UE may assume that the priority of the second information is the second priority irrespective of whether the priority of the first information is configured to be the first priority (high) or the second priority (low). In a case of not receiving information related to the priority of the second information through higher layer signaling, the UE may determine that the priority of the second information is the second priority. By configuring the priority of the second information to be low, it is possible to preferentially perform communication in the primary cell (PCell) through a BFR procedure in the secondary cell (SCell).

### <Option 1-3>

The priority of the second information may be configured based on certain information or a certain condition. The certain information may be, for example, content of the second information.

For example, the UE may determine the priority of the second information, based on whether or not the second information includes information specifying a new candidate beam (option 1-3A). Alternatively, the UE may determine the priority of the second information, based on the timing of receiving a UL grant for scheduling the second information (for example, a BFR MAC CE) (or timing at which the UL grant is transmitted) (option 1-3B). Alternatively, the UE may determine the priority of the second information, based on the number of cells in which a beam failure has occurred, the number of cells being included in the second information (option 1-3C).

### <Option 1-3A>

The priority of the second information may be determined based on whether or not there is information specifying a new candidate beam included in the second information. The information specifying a new candidate beam may be information indicating the index of the new candidate beam or information indicating the index of a reference signal having received power (for example, an RSRP) of a certain value or greater. The received power (for example, the RSRP) may be configured for the UE by the base station through higher layer signaling or the like.

For example, in a case where the information specifying a new candidate beam is included in the second information, the UE may determine that the priority of the second information is the first priority (high). On the other hand, in a case where the information specifying a new candidate beam is not included in the second information (for example, no reference signal having an RSRP of a certain value or greater is detected), the UE may determine that the priority of the second information is the second priority (low).

As described above, by configuring the priority of the second information to be high in a BFR procedure in a case where there is a new beam to be switched to, it is possible to appropriately switch beams. In this way, it is possible to improve communication quality. Note that the priority of the second information is not limited to this and may be configured to be the second priority in a case where information specifying a new candidate beam is included while being configured to be the first priority in a case where information specifying a new candidate beam is not included.

### <Option 1-3B>

The UE may determine the priority of the second information, based on the timing of receiving a UL grant for scheduling the second information (for example, a BFR MAC CE).

For example, it is also conceivable a case in which the UE receives a UL grant in a cell where the second information (for example, the MAC CE for BFR) can be transmitted, without transmitting the first information (for example, a PUCCH for BFR or SR-like BFR). In such a case, the UE may transmit the second information without transmitting the first information. In this case, the UE may determine that the priority of the second information is the first priority (for example, high). In other words, in a case where a UL grant for scheduling a PUSCH with which the second information can be transmitted, before transmission of the first information, the UE may determine that the priority of the second information is the first priority.

In other cases, in contrast, the UE may determine that the priority of the second information is the second priority (low) or may determine the priority of the second information, based on another information or condition. Such other cases may include, for example, a case in which the second information is scheduled by a UL grant transmitted from the base station, based on transmission of the first information. Such another information or condition may be, for example, the condition of option 1-3A.

As described above, in a case where the second information can be transmitted by using a PUSCH scheduled using a UL grant other than a UL grant transmitted using the first information, it is possible to transmit the second information with priority not being based on transmission of the first information, by configuring the priority of the second information to be high.

### <Option 1-3C>

The priority of the second information may be determined based on information related to a cell (for example, the SCell) in which a beam failure included in the second information is detected. The information related to a cell in which a beam failure is detected may be information indicating the number of cells in which the beam failure is detected.

For example, in a case where the number of beam failure detected cells included in the second information is a certain value or greater, the UE may determine that the priority of the second information is the first priority (high). The certain value may be, for example, two. In other words, the UE may configure the priority of the second information to be high in a case where a beam failure is detected in a plurality of cells simultaneously. The certain value is, of course, not limited to this.

In other cases, in contrast, the UE may determine that the priority of the second information is the second priority (low) or may determine the priority of the second information, based on another information or condition. Such other cases may be, for example, a case where the number of beam failure detected cells included in the second information is detected is less than a certain value. Such another information or condition may be, for example, the condition of option 1-3A.

As described above, by configuring the priority of the second information to be high in a case where the number of cells in which a beam failure is detected is large, it is possible to perform operation of switching beams for a plurality cells with priority. In this way, it is possible to improve communication quality.

### <Option 1-4>

The priority of the second information may be configured by the network (for example, the base station). For example, the UE may be configured with or notified of the priority of the second information, based on at least one of higher layer signaling and downlink control information.

The priority of the second information and the priority of the first information may be configured separately (for example, by using different higher layer parameters). In this way, it is possible to flexibly control the priority of the first information and the priority of the second information.

### (Fourth Aspect)

In this aspect, UE operation in a case where second information (for example, a subsequent MAC CE) transmitted from a UE when a beam failure is detected collides with another UL transmission will be described. Although collision of UL transmissions in the same cell group (for example, an MCG, an SCG, or a PUCCH cell group) is used as an example in the following description, this is by no means restrictive. Note that UL transmission may be interpreted as a UL signal or a UL channel.

In a case where the second information and another UL transmission collide with each other, the UE may determine a signal or a channel to transmit, based on the priority of the second information and the priority of such another UL transmission or the type of such another UL transmission. In the following, examples of UE operation in a case where the priority of the second information is higher than the priority of such another UL transmission (case 3-1), a case where the priority of the second information is lower than the priority of such another UL transmission (case 3-2), and a case where the priority of the second information is the same as the priority of such another UL transmission (case 3-3) will be described.

### <Case 3-1>

In a case where the second information and such another UL transmission collide with each other and the priority of the second information (for example, the first priority (high)) is higher than the priority of such another UL transmission (for example, the second priority (low)), the UE may transmit the second information without transmitting (for example, by dropping) such another UL transmission.

In this case, in a case where such another UL transmission is a certain UL signal or UL channel, the UE may perform such control as to prioritize transmission of the certain UL signal or UL channel while not transmitting the second information or postponing the transmission timing. The certain UL signal or UL channel may be at least one of random access channel (for example, PRACH) transmission and PUSCH transmission scheduled using a UL grant (for example, a RAR UL grant) of a random access response. As described above, by prioritizing transmission of the certain UL signal or UL channel irrespective of the priority of the second information, it is possible to perform, with priority, operation (for example, certain operation in the PCell or the PSCell) that is prioritized over a BFR procedure in the SCell. Note that no priority may be configured for the certain UL signal or UL channel.

Alternatively, the UE may autonomously determine which is to prioritize, transmission of the certain UL signal or UL channel or transmission of the second information. Alternatively, the UE may determine which transmission is to prioritize, according to the content of the second information (for example, whether or not there is a new candidate beam, the number of beam failure detected cells, and the like).

### <Case 3-2>

In a case where the second information and such another UL transmission collide with each other and the priority of the second information (for example, the second priority (low)) is lower than the priority of such another UL transmission (for example, the first priority (high)), the UE may perform such control as to perform such another UL transmission without transmitting (for example, by dropping) the second information.

### <Case 3-3>

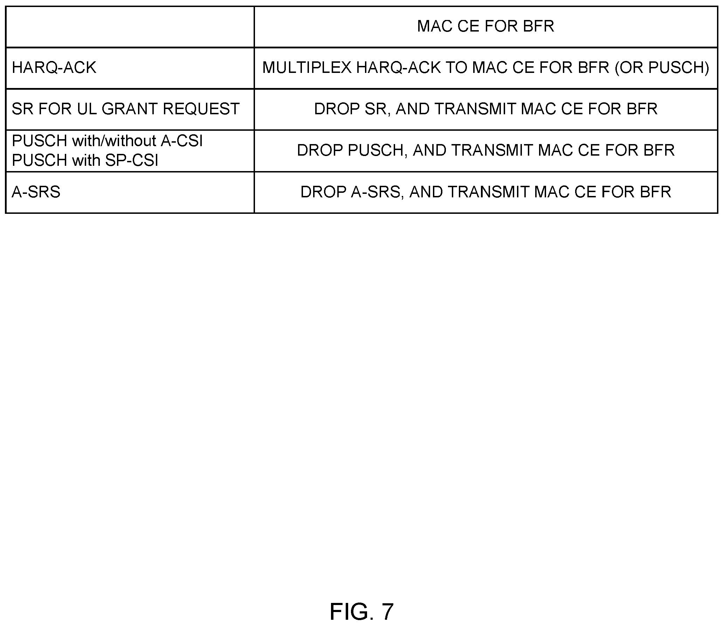

In a case where the second information and such another UL transmission collide with each other and the priority of such another UL transmission and the priority of the second information are the same, the UE may determine a signal or a channel to transmit, based on a certain rule (refer to FIG. 7).

For example, in a case where such another UL transmission is of an HARQ-ACK, the UE may multiplex or include the HARQ-ACK to or in a MAC CE for BFR (or a PUSCH for BFR) used for transmission of the second information, for transmission. In this case, both the second information and the HARQ-ACK can be transmitted. Note that the UE may determine whether or not the HARQ-ACK is multiplexed based on the size of the HARQ-ACK (for example, the number of bits) .

Alternatively, in a case where such another UL transmission is a scheduling request (for example, an SR for requesting a UL grant), the UE may perform such control as to transmit the second information without transmitting (for example, by dropping) the scheduling request. By prioritizing the BFR procedure, it is possible to suppress low latency of beam recovery and improve communication quality.

Note that the UE may multiplex the scheduling request and the second information to the MAC CE for BFR (or the PUSCH for BFR) used for transmission of the second information.

Alternatively, in a case where such another UL transmission is another PUSCH used for other than BFR, the UE may perform such control as to transmit the second information without transmitting (for example, by dropping) such another PUSCH. Such another PUSCH may be, for example, a PUSCH including aperiodic CSI or not including aperiodic CSI. Alternatively, such another PUSCH may be a PUSCH including semi-persistent CSI.

By prioritizing the PUSCH related to BFR, it is possible to suppress low latency of beam recovery and improve communication quality.

Alternatively, in a case where such another UL transmission is an aperiodic SRS, the UE may perform such control as to transmit the second information without transmitting (for example, by dropping) the aperiodic SRS.

Note that the UE may multiplex the aperiodic SRS and the second information to the MAC CE for BFR (or the PUSCH for BFR) used for transmission of the second information. In a case where such another UL transmission is a certain UL signal or UL channel, the UE may perform such control as to prioritize transmission of the certain UL signal or UL channel while not transmitting the second information or postponing the transmission timing.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

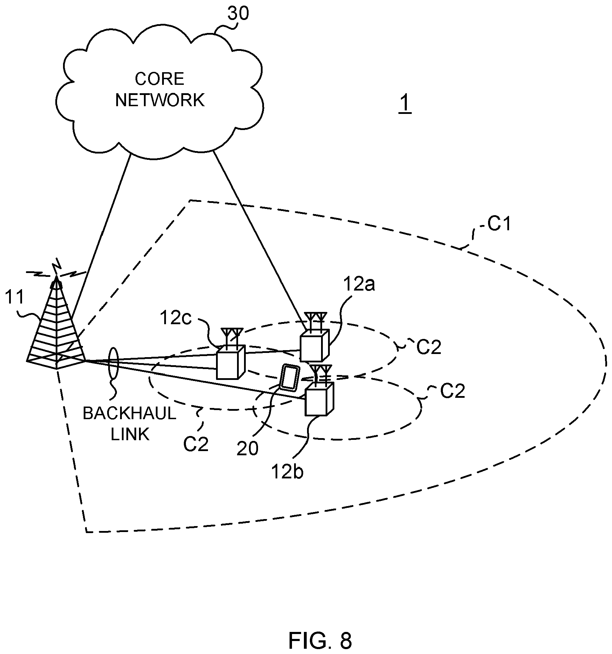

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

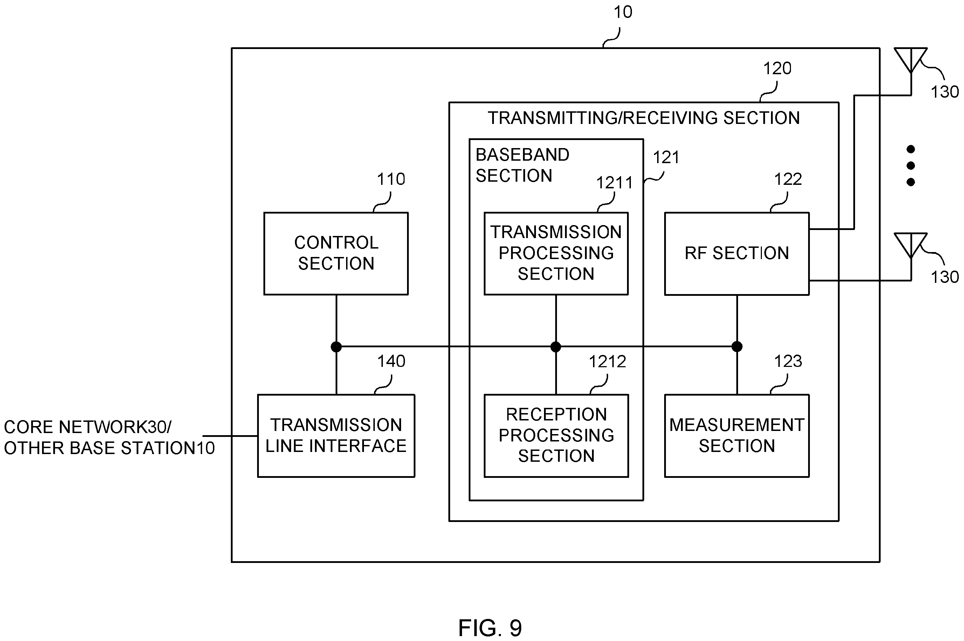

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter,
a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 receives first information (for example, an SR for BFR) for notifying occurrence of a beam failure and second information (for example, a BFR MAC CE) related to at least one of a cell in which a beam failure is detected and a new candidate beam.

In a case where the second information is transmitted after the first information is triggered in the UE, the control section 110 may assume that at least one of cancel of the triggered first information and stop of a timer started based on the transmission of the first information is performed.

### (User Terminal)

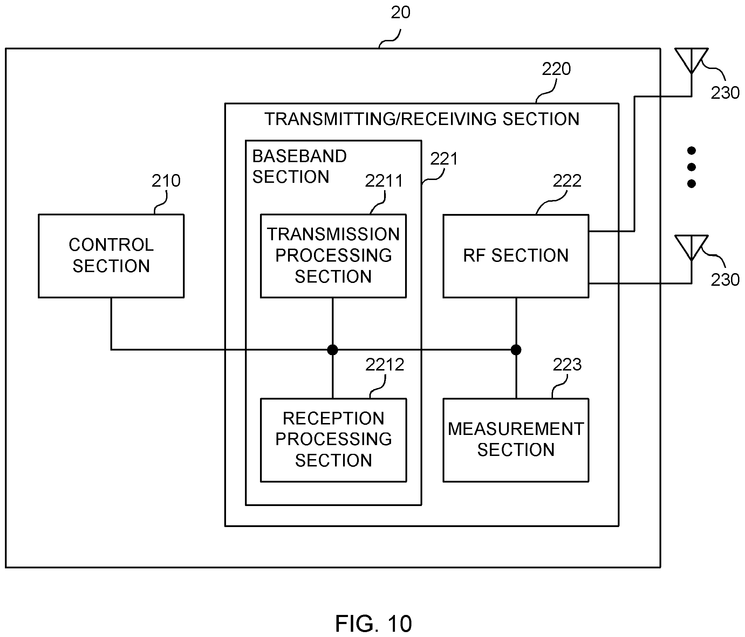

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating first priority of first uplink transmission and receive information indicating second priority of second uplink transmission. In a case where the first uplink transmission and the second uplink transmission overlap each other in time, the control section 210 may control the first uplink transmission and the second uplink transmission, based on at least one of the first priority and the second priority as well as a cell group of the first uplink transmission or the second uplink transmission.

The first uplink transmission may be physical uplink control channel (PUCCH) transmission for beam failure recovery (BFR) in a cell group. The second uplink transmission may be uplink transmission that is not PUCCH transmission for BFR in the cell group.

In a case where the first uplink transmission and the second uplink transmission overlap each other in time and the first priority is identical to the second priority, the control section 210 may transmit at least one of the first uplink transmission and the second uplink transmission, based on at least one of a type of the second uplink transmission, a PUCCH format for the first uplink transmission, and a PUCCH format for the second uplink transmission.

In a case where the first uplink transmission and the second uplink transmission overlap each other in time, when the first priority is lower than the second priority or when the second uplink transmission is at least one of physical random access channel transmission and physical uplink shared channel transmission scheduled by a random access response, the control section 210 may drop the first uplink transmission.

The first uplink transmission may be uplink transmission in a first cell group. The second uplink transmission may be uplink transmission in the second cell group. In the case where the first uplink transmission and the second uplink transmission overlap each other in time, the control section may determine power allocation to the first uplink transmission and the second uplink transmission, based on at least one of the first priority and the second priority, whether or not one of the first cell group and the second cell group includes a primary cell, and which of uplink control information and a physical uplink shared channel each of the first uplink transmission and the second uplink transmission is.

The control section 210 may control detection of a beam failure. The transmitting/receiving section 220 may transmit, based on priority, at least one of first information for notifying occurrence of the beam failure and second information related to at least one of a cell in which the beam failure is detected and a new candidate beam. The priority of the first information and the priority of the second information may be the same.

The priority of the first information and the priority of the second information may be configured separately.

The priority of the second information may be a fixed value.

The priority of the second information may be determined based on at least one of the content of the second information and the type of a UL grant for scheduling the second information.

In a case where the second information and another UL transmission collide with each other in the same cell group, the transmitting/receiving section 220 may perform at least one of the transmissions, based on the priority of the second information and the priority of such another UL transmission or the type of such another UL transmission.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

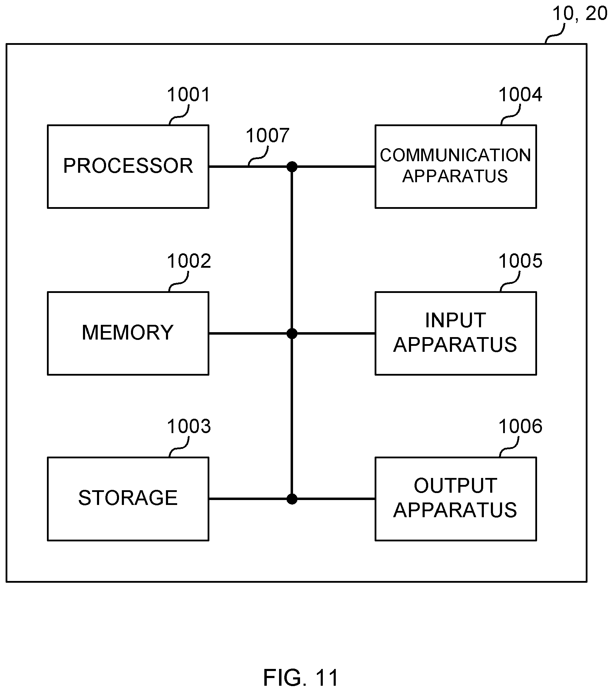

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information indicating first priority of first uplink transmission and receives information indicating second priority of second uplink transmission; and
a control section that controls, in a case where the first uplink transmission and the second uplink transmission overlap each other in time, the first uplink transmission and the second uplink transmission, based on at least one of a combination of the first priority and the second priority and a cell group of the first uplink transmission or the second uplink transmission.

2. The terminal according to claim 1, wherein
the first uplink transmission is physical uplink control channel (PUCCH) transmission for beam failure recovery (BFR) in a cell group, and
the second uplink transmission is uplink transmission other than the PUCCH transmission for the BFR in the cell group.

3. The terminal according to claim 2, wherein
in a case where the first uplink transmission and the second uplink transmission overlap each other in time and the first priority is identical to the second priority, the control section transmits at least one of the first uplink transmission and the second uplink transmission, based on at least one of a type of the second uplink transmission, a PUCCH format for the first uplink transmission, and a PUCCH format for the second uplink transmission.

4. The terminal according to claim 2 or 3, wherein
in a case where the first uplink transmission and the second uplink transmission overlap each other in time, when the first priority is lower than the second priority or when the second uplink transmission is at least one of physical random access channel transmission and physical uplink shared channel transmission scheduled by a random access response, the control section drops the first uplink transmission.

5. The terminal according to claim 1 wherein
the first uplink transmission is uplink transmission in a first cell group,
the second uplink transmission is uplink transmission in a second cell group, and
in the case where the first uplink transmission and the second uplink transmission overlap each other in time, the control section determines power allocation to the first uplink transmission and the second uplink transmission, based on at least one of the first priority and the second priority, whether or not one of the first cell group and the second cell group includes a primary cell, and which of uplink control information and a physical uplink shared channel each of the first uplink transmission and the second uplink transmission is.

6. A radio communication method for a user terminal, the radio communication method comprising:
receiving information indicating first priority of first uplink transmission and receiving information indicating second priority of second uplink transmission; and
controlling, in a case where the first uplink transmission and the second uplink transmission overlap each other in time, the first uplink transmission and the second uplink transmission, based on at least one of a combination of the first priority and the second priority and a cell group of the first uplink transmission or the second uplink transmission.
